Europäisches Patentamt

European Patent Office

Office européen des brevets

(19)

(11) Numéro de publication : **0 333 535 B1**

# (12) FASCICULE DE BREVET EUROPEEN

(45) Date de publication du fascicule du brevet :
15.01.92 Bulletin 92/03

(51) Int. Cl.⁵ : **B62K 25/00**

(21) Numéro de dépôt : **89400492.8**

(22) Date de dépôt : **22.02.89**

(54) **Dispositif de bras support d'un organe tournant notamment d'une roue motrice de motocycle.**

(30) Priorité : **14.03.88 FR 8803280**

(43) Date de publication de la demande :
**20.09.89 Bulletin 89/38**

(45) Mention de la délivrance du brevet :
**15.01.92 Bulletin 92/03**

(84) Etats contractants désignés :
**DE GB IT**

(56) Documents cités :
**EP-A- 0 237 302**
**US-A- 4 664 214**

(73) Titulaire : **ELF FRANCE, Société Anonyme dite:**
**Tour Elf 2 place de la Coupole La Défense 6**
**F-92400 Courbevoie (FR)**

(72) Inventeur : **Trema, Daniel**
**31 rue du 15 Février**
**F-95870 Bezons (FR)**

(74) Mandataire : **Hirsch, Marc-Roger**
**Cabinet Hirsch 34 rue de Bassano**
**F-75008 Paris (FR)**

EP 0 333 535 B1

Jouve, 18, rue Saint-Denis, 75001 PARIS

## Description

La présente invention s'applique à un dispositif de bras support d'un organe tournant, soumis en bout à des sollicitations importantes, tel que, par exemple, le bras arrière unique de support et de suspension d'une roue motrice de motocycle, dans lequel un axe rotatif support de l'organe tournant est susceptible d'être maintenu en position rigidement et de façon réglable à l'extrémité libre du bras. Elle concerne également le bras support proprement dit prêt à recevoir la pièce de support amovible de l'axe rotatif ainsi que la pièce de support de l'axe rotatif avec les moyens qui lui permettent d'être reliée rigidement, mais néanmoins de façon réglable, avec le bras support.

De tels bras supports qui ont consituté d'abord une extension des réalisations automobiles courantes, sont utilisés sur les motocycles pour supporter la roue arrière motrice de ces véhicules. Une adaptation avantageuse au motocycle (EP-A-0237302) consiste à monter la roue arrière et le disque de frein sur l'axe rotatif d'une côté du bras tandis que la couronne ou le pignon de chaîne est monté sur l'axe de l'autre côté du bras, ce qui permet le démontage rapide de la roue et, le cas échéant, du disque de frein sans avoir à modifier le réglage de la chaîne. Dans ces montages de roue sur un bras unique, le réglage de la tension du chaîne s'effectue, en général, à l'aide d'un système d'excentrique qui porte les paliers à grande rigidité de l'axe rotatif. Le système d'excentrique est constitué ainsi d'un support de palier excentré que l'on peut faire tourner autour dans un alésage récepteur afin de régler la tension de chaîne et qui, après réglage, est bloqué par serrage, c'est-à-dire par rapprochement des lèvres d'une fente débouchant sur l'alésage récepteur.

Ce moyen de réglage de la tension de chaîne a fait ses preuves en compétition et le maintien en position du support excentré de palier par serrage s'est révélé fiable et relativement aisé à manipuler. Néanmoins, ce moyen de réglage de la tension de chaîne présente divers inconvénients confirmés par l'usage :
— le réglage fin de la tension de chaîne se révèle difficile à mettre en oeuvre dans les zones de fin de course du système d'excentrique, par suite de l'absence de moyens de positionnement à vis ;
— le réglage de la tension de chaîne n'offre, dans les limites d'encombrement admissibles, qu'une course de réglage limitée de l'ordre d'un maillon de chaîne au maximum, alors qu'il serait nécessaire de disposer d'une course de réglage dépassant deux maillons ;
— au course du réglage par rotation du support de palier excentré, il se produit une variation de l'orientation de la chaîne par rapport au bras support qui porte des guides de chaîne frottants et, parfois même, un canal de chaîne le traversant dans sa zone soumise aux contraintes maximales. Une telle variation d'orientation se révèle nocive pour le guidage correct de la chaîne lorsqu'on s'écarte trop de la zone centrale de réglage et le besoin s'est exprimé de revenir à un réglage de la tension de chaîne par traction axiale ;
— les moyens de réglage de la tension de chaîne doivent maintenant faire face à des forces de traction de chaîne qui dépassent 2000 daN pour les couronnes de chaîne de roue arrière de faible diamètre, nécessaires pour limiter les vitesses de chaîne des motocycles à grande vitesse.

La présente invention a pour but de pallier les défauts et insuffisances qui viennent d'être évoquées tout en conservant un réglage de chaîne qui soit facile à utiliser, fiable et aisé à fabriquer.

A cet effet, selon l'invention, l'extrémité libre du bras comporte des facettes de portage planes et d'orientation générale axiale, aptes à venir en contact avec des facettes de portage conjuguées d'orientation générale transversale, ménagées sur une pièce de support amovible de l'axe rotatif, de manière à guider axialement cette pièce de support pour assurer un réglage de la position axiale de la pièce du support et à permettre le blocage rigide de cette pièce de support sur les facettes de portage de l'extrémité libre du bras par coincement de serrage radial au contact entre lesdites faces de portage conjuguées d'orientation générale axiale et respectivement transversale.

Selon un autre mode de réalisation, les facettes de portage axial ménagées à l'extrémité du bras sont prévues sur des faces de l'extrémité libre du bras qui sont disposées de façon polygonale, par exemple carrée ou rectangulaire, autour de la ligne moyenne médiane du bras, de manière à interdire la rotation de la pièce de support autour de cette ligne médiane moyenne au cours des déplacements de réglage de la pièce de support.

Le bras support peut comporter, sur chaque face, disposée de façon polygonale et du côté opposé aux facettes de portage, au moins une nervure destinée à assurer le renforcement et la rigidité de ladite face. Le bras support peut également comporter des moyens de butée, le cas échéant réglables, aptes à coopérer avec des moyens de butée conjugués prévus sur la pièce de support, de manière à permettre le réglage précis de la position axiale de cette pièce de support avant son blocage rigide sur l'extrémité libre du bras.

Selon un autre mode de réalisation, les facettes de portage de l'extrémité libre du bras sont ménagées sur la paroi intérieure de l'extrémité du bras pour coopérer avec des facettes de portage conjuguées ménagées sur la surface extérieure de la pièce de support et des moyens de serrage par pincement sont prévus à la surface extérieure de l'extrémité du bras.

Selon un mode de réalisation particulièrement avantageux de l'invention, les facettes de portage de l'extrémité libre du bras sont ménagées sur des faces extérieures de l'extrémité du bras pour coopérer avec des facettes de portage conjuguées ménagées sur la paroi intérieure d'une partie de forme générale tubulaire de la pièce de support. L'autre partie de la pièce de support comporte au moins une enveloppe de palier dans laquelle est ménagé un alésage de palier destiné à recevoir et supporter l'arbre rotatif et la partie de forme tubulaire comporte au moins un moyen de serrage par pincement. Les facettes de portage conjuguées et ménagées sur la paroi intérieure sont disposées, de préférence, selon au moins deux couronnes transversales, de forme générale annulaire, et faisant saillie à l'intérieur de ladite paroi intérieure. Un moyen de serrage par pincement est prévu au droit de chaque couronne de facette de portage et est constitué par au moins une fente axiale ménagée au droit de la couronne transversale en débordant de la largeur de cette couronne, chacune des lèvres de la fente étant surmontée vers l'extérieur d'une patte de serrage susceptible d'être traversée au moins partiellement par une vis de serrage. L'extrémité libre du bras support comporte au moins une entaille de forme générale arrondie et susceptible de recevoir au moins une partie de l'enveloppe de palier de la pièce de support.

Selon un autre mode de réalisation facilitant le réglage fin de la position de la pièce de support, au moins une rainure axiale ouverte vers l'extérieur mais à extrémité fermées est ménagée sur au moins deux facettes de portage sensiblement opposées diamétralement et est susceptible de recevoir des organes de roulement, par exemple une plaquette d'aiguilles ou de galets, interposés entre les facettes de portage intérieures de la pièce de support et le fond de ladite rainure pour faciliter le déplacement axial de réglage de la pièce de support par rapport au bras de support.

La pièce de support d'un axe rotatif selon l'invention, par exemple de l'axe d'une roue arrière de motocycle, destinée à venir s'emmancher sur ou dans l'extrémité libre d'un bras support pour constituer un dispositif de bras support précédemment décrit, présente une forme générale tubulaire ouverte à une extrémité avec des facettes de portage ménagées sur sa paroi intérieure, tandis que son autre extrémité est fermée par une enveloppe de palier destinée à recevoir l'axe rotatif et ses organes de palier. Les facettes de portage ménagées sur la pièce de support sont disposées selon au moins une couronne transversale de forme générale annulaire et faisant saillie vers l'intérieur de la paroi intérieure.

La pièce de support comporte avantageusement au droit de chaque couronne de facettes de portage au moins un moyen de serrage constitué d'une fente axiale dont chacune des lèvres est surmontée vers l'extérieur d'une patte de serrage susceptible d'être traversée au moins partiellement par une vie de serrage. La pièce de support présente la forme générale d'un tube à section carrée ou rectangulaire, intérieure ou extérieure, ouvert à une extrémité et fermé à l'autre par une enveloppe de palier en forme générale de corps de révolution, surmontée à l'extérieur d'au moins une patte d'articulation de support d'un organe de freinage de la roue.

D'autres buts, avantages et caractéristiques apparaîtront à la lecture de la description d'un mode de réalisation de l'invention, fait à titre non limitatif et en regard du dessin annexé, où :

— la figure 1      est une vue en plan d'un bras de support de roue selon l'invention, avant le montage de la pièce de support de l'axe rotatif sur lequel est montée la roue arrière d'un motocycle ;

— la figure 2      représente respectivement, en élévation latérale et à plus petite échelle, le bras de support de la figure 1 et, en coupe longitudinal selon le plan IIA-IIA de la figure 4, la pièce de support amovible de l'axe rotatif, juste avant l'emmanchement de cette pièce de support sur l'extrémité libre du bras. La section du bras de support selon le plan I-I de la figure 1 est représentée en vue éclatée sur cette vue en élévation et l'extrémité libre du bras est vue en coupe partielle selon le plan II-II de la figure 1 ;

— la figure 3      représente, à plus grande échelle qu'à la figure 1, la coupe selon le plan III-III de la figure 1 de l'extrémité du bras sur laquelle vient s'emmancher la pièce de support de l'axe rotatif ;

— la figure 4      représente, sensiblement à la même échelle qu'à la figure 3, la coupe selon le plan IV-IV de la figure 2 de la pièce de support de palier équipée d'une couronne d'entraînement de chaîne, d'une roue et d'un disque de frein représentés partiellement en vue fragmentaire et en coupe.

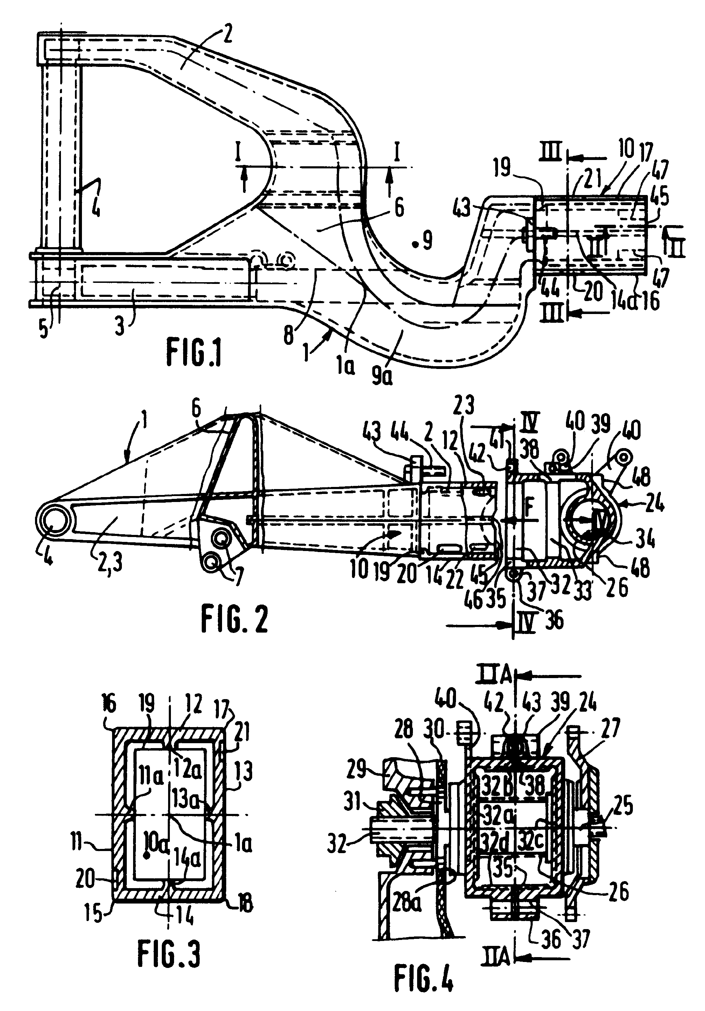

Si l'on se reporte à la figure 1, on voit que le bras unique de support d'une roue arrière de motocycle est constitué par une pièce monobloc 1, venue de fonderie (en alliage d'aluminium ou de magnésium par exemple) et qui présente une fourche avant à deux bras 2 et 3, reliés entre eux par une entretoise 4 et articulés sur un châssis arrière de motocycle (non représenté) pour se débattre en rotation autour d'un axe de rotation 5, en relation avec un ensemble de suspension (non représenté) à ressorts et à amortisseurs. Le bras 1 présente une section centrale 6 de relativement grande hauteur (voir la coupe à la figure 2) pour résister aux sollicitations de flexion et de torsion qui s'y développent, combinées à celles engendrées par les articulations 7 des organes de suspension. La section centrale 6 est traversée par un canal de chaîne 8 et se prolonge vers l'arrière par une partie 9a en forme générale de U, à section rectangulaire, pour envelopper en 9 le passage de la roue arrière (non représentée).

La partie en U 9a destinée à envelopper la section de la jante et du bandage pneumatique de la roue se termine vers l'extérieur par une partie d'extrémité 10 sensiblement droite et orientée dans le plan médian du motocycle. Cette partie 10 présente une section tubulaire rectangulaire représentée en coupe à la figure 3. On remarque sur cette vue en coupe que les quatre faces extérieures de la section rectangulaire constituent des facettes de portage 11, 12, 13, 14, d'orientation générale axiale, planes, usinées avec des chanfreins 15, 16, 17, 18 pour casser les arêtes formées entre deux faces adjacentes. La section rectangulaire qui pourrait être remplacée par une autre forme polygonale, carrée ou hexagonale par exemple, supprime tout risque de rotation au cours des déplacements axiaux de réglage de la pièce de support de roue montée sur cette extrémité libre 10 du bras 1. Pour chaque face de la partie d'extrémité 10 est prévu, du côté opposé à la facette correspondante 11, 12, 13, 14, une nervure 11a, 12a, 13a, 14a destinée à renforcer cette face pour lui permettre de mieux résister aux sollicitations et efforts appliqués sur la facette et à augmenter la rigidité de cette face qui doit conserver le mieux possible sa forme plane, après usinage, en dépit des divers serrages auxquels est soumise la partie d'extrémité 10. Les nervures 11a, 12a, 13a, 14a qui pourraient, en variante, traverser toute la section de la pièce d'extrémité 10, se rejoignent au fond de l'espace intérieur 10a de la partie d'extrémité tubulaire 10 pour former une collerette ou renflement intérieur annulaire 19 de liaison avec la partie avant du bras de support 1. La ligne médiane moyenne 1a du bras 1 qui était droite dans la partie d'extrémité 10 jusqu'au renflement 19, s'oriente alors en courbe pour former une sorte de grand C ou de grand U enveloppant la section de la roue du motocycle.

Des rainures axiales ouvertes vers l'extérieur mais à extrémités fermées 20, 21, 22, 23, sont ménagées sur les facettes opposées 11, 13, par exemple par fraisage avec une fraise en bout. Ces rainures sont destinées à recevoir des organes de roulement (non représentés) tels que des plaquettes de galets ou d'aiguilles, qui sont interposés entre les facettes de portage de la pièce de support et le fond, de préférence plat, de la rainure pour faciliter le coulissement de l'enveloppe de la pièce de support au tour des faces de réglage.

On voit à la figure 2, la pièce 24 de support amovible de l'axe rotatif 25 qui est représenté à la figure 4. L'axe rotatif 25 est monté sur de robustes paliers, par exemple à rouleaux coniques (non représentés) et logés dans une enveloppe de palier 26. L'axe rotatif 25 porte, d'un côté de la pièce de support, une couronne de denture de chaîne 27 et, de l'autre côté, par l'intermédiaire d'un flasque 28 et de vis intercalaires 28a, un moyeu de roue 29 accouplée à un disque de frein 30 et serré sur le flasque 29 par un écrou 31 vissé sur un embout fileté 31a de l'axe 25.

La pièce de support 24 présente, du côté de la partie d'extrémité 10, une forme tubulaire sur la paroi intérieure de laquelle sont ménagées deux couronnes transversales 32 et 33 de facettes de portage 32a, 32b, 32c, 32d (voir la figure 4) faisant saillie vers l'intérieur. Du côté opposé à la partie d'extrémité 10 du bras 1, la pièce de support 24 est fermée par l'enveloppe de palier 26 qui présente un alésage 34 de réception des roulements de l'axe rotatif 25. A la partie basse (selon la figure 2) de la couronne 32 est ménagée une fente longitudinale 35 dont les lèvres sont surmontées chacune par une patte de serrage 36 percée d'un alésage 37 permettant la mise en place d'une vis ou d'un boulon de serrage. De même, à la partie haute de la couronne de portage 33 est ménagée une fente de serrage 38 débordant de la largeur de la couronne 33 et dont chaque lèvre est surmontée d'une patte de serrage 39 remplissant la même fonction que la patte 37. A la partie haute de la pièce de support et au voisinage de l'enveloppe de palier 26, partent des supports 40 d'un organe de freinage de la roue non représenté.

A la partie supérieure de la pièce de support 24 est prévu, en saillie, une patte d'appui de réglage axial 41 percée d'un alésage fileté 42. Au niveau de la couronne intérieure de renforcement 19, le bras unique 1 porte une plaque de butée 43 dans laquelle est vissée une vis de butée au positionnement 44 qui peut venir se visser dans l'alésage fileté 42. On remarque également que l'extrémité 45 du bras de support 1 et donc de la partie d'extrémité 10 présente une entaille 46 de forme arrondie et susceptible de recevoir une partie de l'enveloppe de palier 26. Les angles de l'ouverture de l'extrémité libre 45 comportent des bossages 47 de faible longueur dans lesquels est ménagé un alésage fileté non représenté. Des vis non représentées traversant des bossages conjugués 48 ménagés sur la pièce de support 24 au voisinage de l'enveloppe de palier 26, peuvent venir se visser dans les alésages filetés des bossages 47 pour faciliter le déplacement axial de réglage de la pièce de support 24 et, le cas échéant, renforcer la liaison de friction entre cette pièce de support et la pièce d'extrémité 10 du bras 1.

La figure 2 illustre le fonctionnement du dispositif de bras support complet selon l'invention. La pièce de support 24 est introduite, de préférence équipée de l'axe rotatif 25 et de ses équipements (roue complète, disque de frein 30, couronne de pignon 27) sur la partie d'extrémité 10 par coulissement axial selon la flèche F et vient s'appliquer, par ses facettes intérieures 32a, 32b, 32c, 32d, des couronnes 32 et 33 sur les facettes conjuguées 11, 12, 13, 14, de la partie d'extrémité 10.

Après mise en place de la chaîne (non représentée) sur la couronne de chaîne 27, il est possible de régler la tension de chaîne en engageant la vis 44 dans l'alésage fileté 42. Lorsque la tension de chaîne est réglée, la pièce de support 24 est bloquée rigidement sur la pièce d'extrémité 10 par serrage des pattes 36 et 39 des fentes 35 et 38. Les efforts et contraintes les plus violents exercés sur l'axe rotatif 25 ne pourront alors plus produire de décalage ou de glissement de la pièce de support 24 par rapport au bras de support 1 car le serrage par pincement, combiné à l'ajustement à facettes, produit un blocage très énergique des facettes conjuguées et qui est capable de s'opposer à l'effet des pires champs de vibration.

De nombreuses variantes de réalisation et d'application de l'invention sont possibles. Ainsi, on peut prévoir des vis de blocage transversales traversant la paroi annulaire de la pièce de support 24 et venant s'appuyer sur une surface d'appui en creux ménagée sur les facettes d'appui 11, 12, 13, 14, à la manière des rainures 20, 21, 22, 23. Le serrage de la pièce de support sur la partie d'extrémité 10 peut être réalisé à l'aide d'un système à came ou excentrique, à action rapide, permettant le réglage quasi instantané de la tension de chaîne. La section des facettes de portage extérieures ou intérieures sur la partie d'extrémité 10 peut être non plus polygonale mais circulaire, ce qui en facilite l'usinage, avec une ou plusieurs rainures ou cannelures de guidage axial.

## Revendications

1. Dispositif de bras support d'un organe tournant, soumis en bout à des sollicitations importantes, tel que par exemple le bras arrière unique de support et de suspension d'une roue motrice de motocycle, dans lequel un axe rotatif support de l'organe tournant est susceptible d'être maintenu en position rigidement et de façon réglable, à l'extrémité libre du bras, caractérisé en ce que l'extrémité libre (10) du bras (1) comporte des facettes de portage (11, 12, 13, 14) planes et d'orientation générale axiale, aptes à venir en contact avec des facettes de portage conjuguées (32a, 32b, 32c, 32d) d'orientation générale transversale ménagées sur une pièce de support amovible (24) de l'axe rotatif (25), de manière à guider axialement cette pièce de support pour assurer un réglage de la position axiale de la pièce de support et à permettre le blocage rigide de cette pièce de support sur les facettes de portage de l'extrémité libre (10) du bras (1) par coincement de serrage radial au contact entre lesdites facettes de portage conjuguées d'orientation générale axiale et respectivement transversale.

2. Dispositif selon la revendication 1, caractérisé en ce que les facettes de portage axial (11, 12, 13, 14) ménagées à l'extrémité du bras sont prévues sur des faces de l'extrémité libre (10) du bras qui sont disposées de façon polygonale, par exemple carrée ou rectangulaire, autour de la ligne moyenne médiane (1a) du bras (1), de manière à interdire la rotation de la pièce de support (24) autour de cette ligne médiane moyenne (1a) au cours des déplacements de réglage de la pièce de support.

3. Dispositif selon la revendication 2, caractérisé en ce que le bras support (1) comporte, sur chaque face disposée de façon polygonale et du côté opposé aux facettes de portage (11, 12, 13, 14), au moins une nervure (11a, 12a, 13a, 14a) destinée à assurer le renforcement et la rigidité de ladite face.

4. Dispositif selon l'une des revendications 1 à 3, caractérisé en ce que le bras support (1) comporte des moyens de butée (43, 44), le cas échéant réglables, aptes à coopérer avec des moyens de butée conjuguée (41, 42) prévus sur la pièce de support (24), de manière à permettre le réglage précis de la position axiale de cette pièce de support avant son blocage rigide sur l'extrémité libre (10) du bras.

5. Dispositif selon l'une des revendications 1 à 4, caractérisé en ce que les facettes de portage (11, 12, 13, 14) de l'extrémité libre (10) du bras (1) sont ménagées sur la paroi intérieure de l'extrémité du bras pour coopérer avec des facettes de portage conjuguées ménagées sur la surface extérieure de la pièce de support (24) et en ce que des moyens de serrage par pincement sont prévus à la surface extérieure de l'extrémité du bras.

6. Dispositif selon l'une des revendications 1 à 4, caractérisé en ce que les facettes de portage (11, 12, 13, 14) de l'extrémité libre (10) du bras sont ménagées sur des faces extérieures de l'extrémité libre (10) du bras pour coopérer avec des facettes de portage conjuguées (32a, 32b, 32c, 32c, 32d) ménagées sur la paroi intérieure d'une partie de forme générale tubulaire de la pièce de support.

7. Dispositif selon la revendication 6, caractérisé en ce que l'autre partie de la pièce de support comporte au moins une enveloppe de palier (26) dans laquelle est ménagé un alésage de palier (34) destiné à recevoir et supporter l'arbre rotatif (25) et en ce que la partie de forme tubulaire comporte au moins un moyen de serrage par pincement (35, 36, 37 ; 38, 39).

8. Dispositif selon l'une des revendications 6 ou 7, caractérisé en ce que les facettes de portage conjuguées (32a, 32b, 32c, 32d) ménagées sur la paroi intérieure sont disposées selon au moins deux couronnes transversales (32, 33), de forme générale annulaire et en saillie à l'intérieur de ladite paroi intérieure.

9. Dispositif selon la revendication 8, caractérisé en ce qu'un moyen de serrage par pincement (35, 36, 37 ; 38, 39) est prévu au droit de chaque couronne (32, 33) de facettes de portage.

10. Dispositif selon la revendication 9, caractérisé en ce que le moyen de serrage est constitué par au moins une fente axiale (35, 38) ménagée au droit de la couronne transversale (32, 33) en débordant de la largeur de cette couronne, chacune des lèvres de la fente étant surmontée vers l'extérieur d'une patte de serrage (36, 39) susceptible d'être traversée au moins partiellement par une vis de serrage.

11. Dispositif selon l'une des revendications 6 à 10, caractérisé en ce que l'extrémité libre (10) du bras support (1) comporte au moins une entaille (46) de forme générale arrondie et susceptible de recevoir au moins une partie de l'enveloppe de palier (26) de la pièce de support (24).

12. Dispositif selon l'une des revendications 6 à 11, caractérisé en ce qu'au moins une rainure axiale (20, 21, 22, 23) ouverte vers l'extérieur mais à extrémités fermées est ménagée sur au moins deux facettes de portage (11, 13) sensiblement opposée diamétralement et est susceptible de recevoir des organes de roulement, par exemple une plaquette d'aiguilles ou de galets, interposés entre les facettes de portage intérieures (32a, 32b, 32c, 32d) de la pièce de support (24) et le fond de ladite rainure pour faciliter le déplacement axial de réglage de la pièce de support (24) par rapport au bras de support (1).

13. Pièce de support d'un axe rotatif, par exemple de l'axe d'une roue arrière de motocycle, destinée à venir s'emmancher sur ou dans l'extrémité libre d'un bras support pour constituer un dispositif de bras support selon l'une des revendications 1 à 12, caractérisée en ce qu'elle présente une forme générale tubulaire ouverte à une extrémité avec des facettes de portage (32a, 32b, 32c, 32d) ménagées sur sa paroi intérieure, tandis que son autre extrémité est fermée par une enveloppe de palier (26) destinée à recevoir l'axe rotatif (25) et ses organes de palier.

14. Pièce de support selon la revendication 13, caractérisée en ce que les facettes de portage (32a, 32b, 32c, 32d) sont disposées selon au moins une couronne transversale (32, 33) de forme générale annulaire et en saillie vers l'intérieur de la paroi intérieure.

15. Pièce de support selon la revendication 13 ou 14, caractérisée en ce qu'elle comporte au droit de chaque couronne (32, 33) de facettes de portage au moins un moyen de serrage constitué d'une fente axiale (35, 38) dont chacune des lèvres est surmontée vers l'extérieur d'une patte de serrage (36, 39) susceptible d'être traversée au moins partiellement par une vis de serrage.

16. Pièce de support selon l'une des revendications 13 à 15, caractérisée en ce qu'elle présente la forme générale d'une tube à section carrée ou rectangulaire, intérieure ou extérieure, ouvert à une extrémité et fermé à l'autre par une enveloppe de palier (26) en forme générale de corps de révolution, surmontée à l'extérieur d'au moins une patte d'articulation de support (40) d'un organe de freinage de la roue.

**Patentansprüche**

1. Tragarmvorrichtung zum Tragen eines Drehorgans, die endseitig erheblichen Belastungen ausgesetzt ist, wie z.B. der ein angetriebenes Rad eines Motorrads tragende und aufhängende einzige hintere Tragarm, und in welcher eine tragende Drehachse des Drehorgans am freien Ende des Armes fest und einstellbar getragen wird, dadurch gekennzeichnet, dass das freie Ende (10) des Arms (1) wesentlich axial ausgerichtete ebene Tragfacetten (11, 12, 13, 14) aufweist, die mit entsprechenden, wesentlich quer ausgerichteten Tragfacetten (32a, 32b, 32c, 32d) zusammenwirken, welche an einem abnehmbaren Tragteil (24) der Drehachse (25) ausgebildet sind, so dass dieser Tragteil axial geführt wird, um eine axiale Einstellung desselben, sowie dessen Festlegung auf den Tragfacetten des freien Endes (10) des Tragarms (1) durch radiale Spannklammerung zwischen den einander entsprechenden wesentlich axial bzw. quer ausgerichteten Tragfacetten zu gestatten.

2. Vorrichtung nach Anspruch 1, dadurch gekennzeichnet, dass die axialen Tragfacetten (11, 12, 13, 14) des Tragarmendes an Flächen des freien Endes (10) des Armes ausgebildet sind, welche um die Mittelachslinie (1a) des Arms (1) herum polygonal (vieleckig), wie quadratisch oder rechteckig angeordnet sind, um ein Drehen des Tragteils (24) um diese Mittelachse (1a) während des Einstellens des Tragteils zu unterbinden.

3. Vorrichtung nach Anspruch 2, dadurch gekennzeichnet, dass der Tragarm (1) auf jeder der polygonal angeordneten Flächen und auf der den Tragfacetten (11, 12, 13, 14) gegenüber liegenden Seite wenigstens eine Rippe (11a, 12a, 13a, 14a) zur Verstärkung und Versteifung der Fläche aufweist.

4. Vorrichtung nach einem der Ansprüche 1 bis 3, dadurch gekennzeichnet, dass der Tragarm (1) gegebenenfalls einstellbare Anschlagmittel (43, 44) aufweist, die mit entsprechenden, an dem Tragteil (24) angeordneten Anschlagmitteln (41, 42) derart zusammenwirken, dass ein genaues Einstellen der axialen Lage des Tragteils vor seiner Festlegung am freien Tragarmende (10) ermöglicht ist.

5. Vorrichtung nach einem der Ansprüche 1 bis 4, dadurch gekennzeichnet, dass die Tragfacetten (11, 12, 13, 14) des freien Endes (10) des Tragarms (1) an der Innenwandung des Armendes ausgebildet sind, um mit entsprechenden, an der Aussenfläche des Tragteils (24) ausgebildeten Tragfacetten zusammenzuwirken, und dass Klemmspannmittel an der Aussenfläche des Tragarmendes vorgesehen sind.

EP 0 333 535 B1

6. Vorrichtung nach einem der Ansprüche 1 bis 4, dadurch gekennzeichnet, dass die Tragfacetten (11, 12, 13, 14) des freien Armendes (10) an Aussenflächen des freien Tragarmendes (10) ausgebildet sind, um mit entsprechenden Tragfacetten (32a, 32b, 32c, 32d) zusammenzuwirken, die an der Innenwandung eines wesentlich rohrförmigen Teils des Tragteils ausgebildet sind.

7. Vorrichtung nach Anspruch 6, dadurch gekennzeichnet, dass der andere Teil des Tragteils wenigstens eine Lagerbuchse (26) aufweist, in der eine Lagerbohrung (34) vorgesehen ist, die die Drehachse (25) aufnehmen und tragen soll, und dass der rohrförmige Teil wenigstens ein Klemmhaltemittel (35, 36, 37 ; 38, 39) besitzt.

8. Vorrichtung nach einem der Ansprüche 6 und 7, dadurch gekennzeichnet, dass die genannten entsprechenden Tragfacetten (32a, 32b, 32c, 32d) an der Innenwandung in Form wenigstens zweier wesentlich ringförmiger Querkränze (32, 33) angeordnet sind und von der Innenwandung nach innen ragen.

9. Vorrichtung nach Anspruch 8, dadurch gekennzeichnet, dass ein Klemmspannmittel (35, 36, 37 ; 38, 39) gegenüber von jedem Tragfacettenkranz (32, 33) vorgesehen ist.

10. Vorrichtung nach Anspruch 9, dadurch gekennzeichnet, dass das Klemmspannmittel durch wenigstens einen Axialschlitz (35, 38) gebildet wird, der auf den Querkranz (32, 33) ausgerichtet ist und sich über mehr als die Breite desselben erstreckt, wobei an jedem Rand des Schlitzes ein nach aussen hervorragender Spannansatz (36, 39) übergeht und durch eine Spannschraube zumindest teilweise durchsetzbar ist.

11. Vorrichtung nach einem der Ansprüche 6 bis 10, dadurch gekennzeichnet, dass das freie Ende (10) des Tragarms (1) wenigstens eine wesentlich abgerundete Kerbe (46) aufweist, die wenigstens einen Teil der Lagerbuchse (26) des Tragteils (24) aufnehmen kann.

12. Vorrichtung nach einem der Ansprüche 6 bis 11, dadurch gekennzeichnet, dass an wenigstens zwei wesentlich diametral einander gegenüberliegenden Tragfacetten (11, 13) wenigstens eine nach aussen offene, doch an den Enden geschlossene Axialnut (20, 21, 22, 23) eingearbeitet ist, die Wälzorgane, wie Nadeln bzw. Rollen aufnimmt, welch letztere zwischen den inneren Tragfacetten (32a, 32b, 32c, 32d) des Tragteils (24) und dem Nutenboden angeordnet sind, um die axiale Einstellverschiebung des Tragteils (24) in bezug auf den Tragarm (1) zu erleichtern.

13. Tragteil für eine Drehachse, wie die Hinterachse eines Motorrads, der auf bzw. in das freie Ende eines Tragarms einsteckbar ist, um eine Tragarmvorrichtung nach einem der Ansprüche 1 bis 12 zu bilden, dadurch gekennzeichnet, dass er einen wesentlich rohrförmigen, an einem Ende offenen Teil bildet, dessen Innenwandung Tragfacetten (32a, 32b, 32c, 32d) ausgebildet sind, wobei das andere Ende des Teils durch eine die Drehachse (25) und die zugehörigen Lagerorgane aufnehmende Lagerbuchse verschlossen ist.

14. Tragteil nach Anspruch 13, dadurch gekennzeichnet, dass die Tragfacetten (32a, 32b, 32c, 32d) die Form wenigstens eines Querkranzes (32, 33) von wesentlich ringförmiger Gestalt besitzen, und von der Innenwandung nach innen ragen.

15. Tragteil nach Anspruch 13 oder 14, dadurch gekennzeichnet, dass er, auf jeden Tragfacettenkranz (32, 33) ausgerichtet, wenigstens ein Klemmspannmittel aufweist, das durch einen Axialschlitz (35, 38) gebildet wird, dessen beide Ränder einen sich nach aussen erstreckenden Spannansatz (36, 39) besitzen, der wenigstens teilweise von einer Spannschraube durchdringbar ist.

16. Tragteil nach einem der Ansprüche 13 bis 15, dadurch gekennzeichnet, dass er wesentlich die Form eines im inneren oder äusseren Querschnitt quadratischen bzw. rechteckigen Rohrs besitzt, welches an einem Ende offen und am anderen Ende durch eine wesentlich einen Drehkörper bildende Lagerbuchse (26) verschlossen ist, und ferner an der Aussenseite wenigstens einen hinüberragenden Gelenkträgerlappen (40) eines mit dem Rad zusammenwirkenden Bremsorgans aufweist.


**Claims**

1. Arm device for supporting a rotating element, the end of which is subject to great forces, such as, for example the single support and suspension rear arm of a driving wheel of a motorcycle, in which the rotary support axle of the rotating member is adapted to be maintained rigidly in position in an adjustable manner at the free end of the arm, characterized in that the free end (10) of the arm (1) comprises plane and generally axial bearing surfaces (11, 12, 13, 14), adapted to enter into contact with corresponding and generally transversally directed bearing surfaces (32a, 32b, 32c, 32d) provided on a removable bracket piece (24) of the rotary axle (25), so as to axially guide this bracket piece in order to ensure adjustment of the axial position of the bracket piece and to allow the rigid blocking of this bracket piece on the bearing surfaces of the free end (10) of the arm (1) by a radial wedging clamping action upon contact between the said corresponding bearing surfaces which are generally and respectively directed axially and transversally.

2. Device according to claim 1, characterized in that the axial bearing surfaces (11, 12, 13, 14) formed at the end of the arm are provided on the faces of the free end (10) of the arm which are disposed in a polygonal manner, for example square or rectangular, about the median mean line (1a) of the arm (1), whereby the rotation of the bracket piece (24) about this mean median line (1a) during the adjustment displacements of the said bracket piece is prevented.

3. Device according to claim 2, characterized in that the support arm (1) comprises, on each face, disposed polygonally and on the side opposite the bearing surfaces (11, 12, 13, 14), at least one rib (11a, 12a, 13a, 14a) adapted to ensure the strengthening and the stiffness of the said face.

4. Device according to one of claims 1 to 3, characterized in that the support arm (1) includes abutment means (43, 44), adjustable where necessary, adapted to cooperate with corresponding abutment means (41, 42) provided on the bracket piece (24), in such a manner as to allow the exact adjustment of the axial position of this bracket piece prior to its rigid blocking on the free end (10) of the arm.

5. Device according to one of claims 1 to 4, characterized in that the bearing surfaces (11, 12, 13, 14) on the free end (10) of the arm (1) are provided on the inner wall of the end of the arm in order to cooperate with corresponding bearing surfaces provided on the external surface of the bracket piece (24) and in that means for clamping by wedging are provided on the external surface of the end of the arm.

6. Device according to one of claims 1 to 4, characterized in that the bearing surfaces (11, 12, 13, 14) on the free end (10) of the arm are provided on the external faces at the end (10) of the arm in order to cooperate with corresponding bearing surfaces (32a, 32b, 32c, 32d) provided on the inner wall of a generally tubular portion of the bracket piece.

7. Device according to claim 6, characterized in that the other portion of the bracket piece comprises at least one bearing shell (26) in which is provided a bearing bore (34) intended to receive and support the rotary shaft (25) and the tubular portion comprises at least one clamping by wedging means (35, 36, 37 ; 38, 39).

8. Device according to one of claims 6 or 7, characterized in that the corresponding bearing surfaces (32a, 32b, 32c, 32d) provided on the inner wall are placed, along at least two transversal rings (32, 33), generally annular and protruding from the inside of the said inner wall.

9. Device according to claim 8, characterized in that the clamping by wedging means (35, 36, 37 ; 38, 39) are provided opposite each bearing surface ring (32, 33).

10. Device according to claim 9, characterized in that the clamping by wedging means is constituted by at least one axial slot (35, 38) provided opposite the transversal ring (32, 33) protruding from the width of this ring, each of the lips of the slot being extended towards the outside by a clamping lug (36, 39) adapted to be crossed through at least partially by a clamping screw.

11. Device according to one of claims 6 to 10, characterized in that the free end (10) of the support arm (1) comprises at least one notch (46) having a generally rounded shape and adapted to receive at least one part of the bearing shell (26) of the bracket piece (24).

12. Device according to one of claims 6 to 11, characterized in that at least one axial groove (20, 21, 22, 23) opened towards the outside but closed at the end is provided on at least two substantially diametrically opposed bearing surfaces (11, 13) and is adapted to receive bearing members, for example a spindle or roller plate, interposed between the internal bearing surfaces (32a, 32b, 32c, 32d) of the bracket piece (24) and the bottom of the said groove in order to facilitate the axial adjustment movement of the bracket piece (24) with respect to the support arm (1).

13. Bracket piece of a rotary axle, for example of the axle of a motorcycle rear wheel, intended to be fitted onto or within the free end of a support arm to constitute an arm support device according to one of claims 1 to 12, characterized in that it has a generally tubular form open at one end with bearing surfaces (32a, 32b, 32c, 32d) provided on its inner wall, while its other end is closed by a bearing shell (26) intended to receive the rotary axle (25) and its bearing members.

14. Bracket piece of a rotary axle according to claim 13, characterized in that the bearing surfaces (32a, 32b, 32c, 32d) are disposed according to at least one transversal ring (32, 33) having a generally annular shape and protruding inwardly from the inner wall.

15. Bracket piece according to claim 13 or 14, characterized in that it includes opposite each bearing surface ring (32, 33) at least one clamping means constituted by an axial slot (35, 38) each lip of which is extended outwardly by a clamping lug (36, 39) adapted to be crossed through at least partially by a clamping screw.

16. Bracket piece according to one of claims 13 to 15, characterized in that it has the general form of a tube with internal or external square or rectangular cross-sections, open at one end and closed at the other by a bearing shell (26) having the general shape of a revolution body, extended outwardly by at least one pivoting bracket lug (40) of a wheel braking member.

FIG.1

FIG. 2

FIG.3

FIG.4